**Europäisches Patentamt**

**European Patent Office**

**Office européen des brevets**

(19)

(11) Veröffentlichungsnummer: **0 188 998**
A1

## (12) EUROPÄISCHE PATENTANMELDUNG

(21) Anmeldenummer: **85810021.7**

(22) Anmeldetag: **23.01.85**

(51) Int. Cl.⁴: **B 64 C 5/08**

(43) Veröffentlichungstag der Anmeldung: **30.07.86**
Patentblatt **86/31**

(84) Benannte Vertragsstaaten: **AT BE CH DE FR GB IT LI LU NL SE**

(71) Anmelder: **FIDES TREUHAND GmbH, Hofaue 95, D-5600 Wuppertal 1 (DE)**

(72) Erfinder: **Der Erfinder hat auf seine Nennung verzichtet**

(74) Vertreter: **Seehof, Michel et al, c/o AMMANN PATENTANWAELTE AG BERN Schwarztorstrasse 31, CH-3001 Bern (CH)**

(54) **Supermanövrierbares Flugzeug.**

(57) Das supermanövrierbare Flugzeug (1) weist zusätzlich zu den Tragflügeln (3) Teile (6, 7) auf, die um Achsen (8, 9), die etwa in Richtung der Rumpflängsmittelachse angeordnet sind, schwenkbar und etwa senkrecht zu den Tragflügelflächen bringbar oder herausfahrbar sind.

Durch das Einschwenken oder Herausfahren der Zusatzflächen ergibt sich bei grossen Schiebewinkeln die Möglichkeit für einen horizontalen Kurvenflug, ohne eine Rollbewegung durchführen zu müssen. Ausserdem wird dabei das Flugzeug schnell abgebremst und in eine günstige Kampfposition gebracht.

Durch ausschwenkbare oder herausfahrbare vordere Seitenleitwerksflächen kann die Supermanövrierbarkeit weiter erhöht werden, was die Verwendung von starren Bordwaffen begünstigt.

0 188 998

## Supermanövrierbares Flugzeug

Die vorliegende Erfindung bezieht sich auf ein supermanövrierbares Flugzeug, insbesondere Kampfflugzeug mit Strahltriebwerken. Bei einem Kampfflugzeug kommt es entscheidend darauf an, dass es eine sehr gute Manövrierfähigkeit aufweist. Es soll schnell fliegen können, aber auch schnell in Langsamflug mit der Möglichkeit grosser Wendegeschwindigkeiten übergehen können und soll während dem Flug schnell abgebremst werden können. Eine Bremskraft kann man durch Schubumkehr des Strahltriebwerkes erreichen, doch beträgt dabei die Bremskraft nur etwa 70% der maximalen Schubkraft. Diese Verzögerung ist nicht gross genug für ein schnelles Ausweichmanöver. Eine Bremskraft als Luftwiderstand kann ausserdem dadurch erzeugt werden, dass man dem Flugzeug einen sehr hohen Anstellwinkel von $30^{\circ}$ bis $60^{\circ}$ erteilt. Bei hohen Geschwindigkeiten treten dabei jedoch unzulässig hohe Beschleunigungen auf. Deshalb kann diese Methode nur bei niedrigeren Fluggeschwindigkeiten angewendet werden.

Es sind Flugzeuge bekannt, die man als supermanövrierbar bezeichnet, beispielsweise ein zur Kategorie der Senkrechtstarter gehörendes Kampfflugzeug, dessen Strahltriebwerke in vertikaler Richtung verstellbar sind. Dadurch kann das Flugzeug schneller steigen, wobei es stärker abgebremst wird als ein herkömmliches Flugzeug. Solche schwenkbaren Triebwerke oder schwenkbaren Düsenaggregate sind jedoch sehr aufwendig. Es ist demgegenüber Aufgabe der vorliegenden Erfindung, ein supermanövrierbares Flugzeug anzugeben, das bei geringerem baulichen Aufwand eine grosse Beweglichkeit aufweist. Dieses Flugzeug wird in den Ansprüchen beschrieben.

Im folgenden wird die Erfindung anhand einer Zeichnung von Ausführungsbeispielen näher erläutert, wobei es sich bei den Figuren durchwegs um schematische Darstellungen handelt.

Figur 1 zeigt ein erstes Ausführungsbeispiel von vorne,

Figur 2 zeigt das Ausführungsbeispiel von Figur 1 von oben,

Figur 3 zeigt ein Teil des Flugzeugs gemäss Figur 1 von der Seite,

Figur 4 zeigt das Flugzeug gemäss Figur 3 mit abgeklappten Zusatzflächen,

Figur 5 zeigt ein zweites Ausführungsbeispiel des erfindungsgemässen Flugzeugs,

Figuren 6 und 7 zeigen zwei Ausführungsvarianten von Figur 5,

Figur 8 zeigt ein drittes Ausführungsbeispiel,

Figur 9 zeigt ein viertes Ausführungsbeispiel,

Figur 10 zeigt einen Schnitt durch einen Tragflügel mit angeschmiegter Zusatzfläche,

Figur 11 zeigt eine Ausführungsvariante des erfindungsgemässen Flugzeugs,

Figur 12 zeigt eine weitere Ausführungsvariante,

Figur 13 zeigt eine weitere Ausführungsvariante,

die Figuren 14 - 16 zeigen ein weiteres Ausführungsbeispiel von der Seite und von oben,

Figur 17 zeigt eine Ausführungsvariante zum Flugzeug gemäss den Figuren 14 - 16,

die Figuren 18 - 20 zeigen ein weiteres Ausführungsbeispiel von der Seite, von vorne und von oben, und

die Figuren 21 und 22 zeigen eine Ausführungsvariante von der Seite und von hinten.

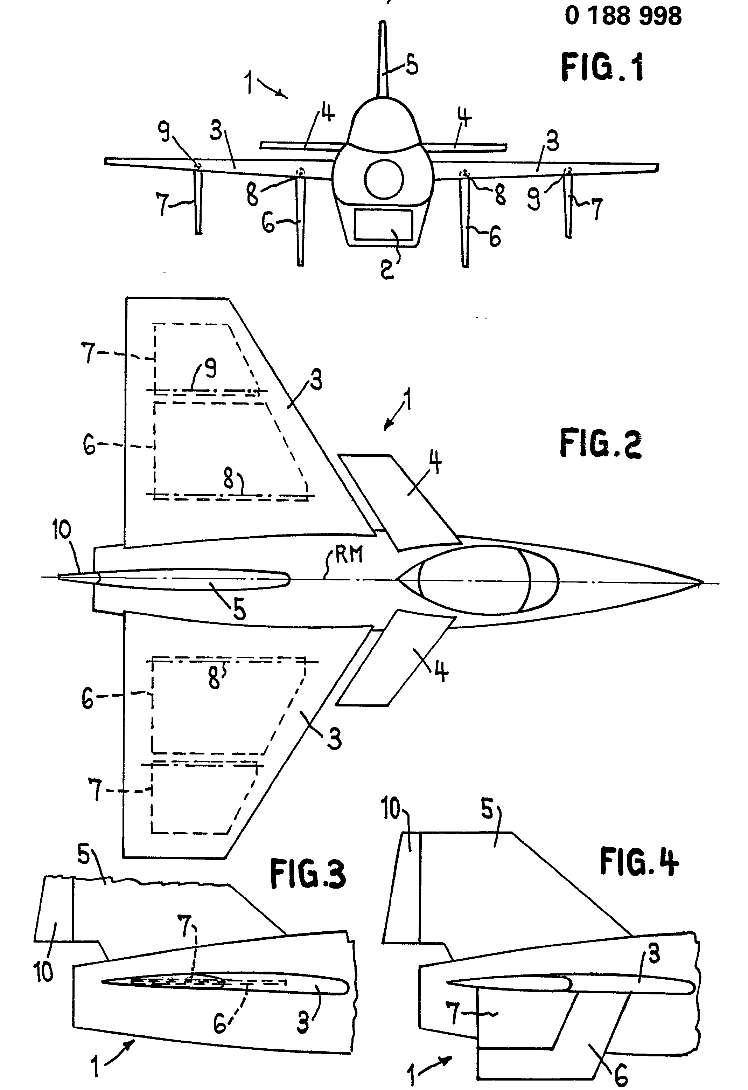

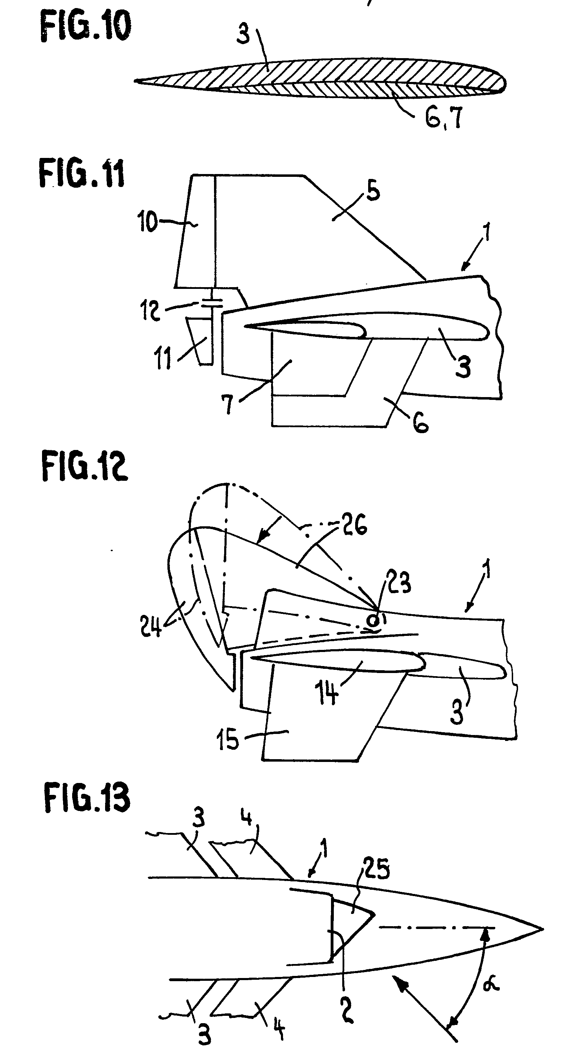

Im ersten Ausführungsbeispiel gemäss den Figuren 1 bis 4 erkennt man ein Kampfflugzeug 1 mit dem Strahltriebwerkeinlass 2, den nach hinten gepfeilten Tragflügeln 3, dem vorne angebrachten Höhenleitwerk 4, auch Entenleitwerk genannt, sowie das Seitenleitwerk 5. Das Flugzeug weist sämtliche dafür vorgesehene Steuerorgane, elektronische und elektrische Einrichtungen auf, die zum Betrieb des Flugzeuges auf herkömmliche Art notwendig sind. Zur Erzielung der erhöhten Beweglichkeit, d.h. der Supermanövrierbarkeit weist das Flugzeug im ersten Ausführungsbeispiel Zusatzflächen 6 und 7 auf, die in Figur 1 im heruntergeschwenkten Zustand dargestellt sind. In Figur 2 sieht man die Zusatzflächen im hochgeschwenkten Zustand. Im Normalfall befinden sich die Zusatzflächen in dieser Stellung und haben keinerlei Auswirkung auf das normale Flugverhalten des Flugzeuges, da sie sich an die Tragflügelflächen anschmiegen, wie aus dem Schnitt gemäss Figur 10 hervorgeht. Bei Bedarfsfall, d.h. bei einem Beginn eines Luftkampfes, werden die Zusatzflächen um ihre Achsen 8, 9 heruntergeschwenkt, wobei diese Achsen 8 oder 9 in der Regel etwa parallel zur Längsmittelachse RM des Rumpfes des Flugzeuges angeordnet sind. Beim Herunterklappen entstehen keine zusätzlichen Luftkräfte. Diese treten erst auf, wenn durch Betätigung des Seitenruders 10 (Figuren 3 und 4) das Flugzeug in eine Schiebewinkellage gebracht wird. Dann werden diese Zusatzflächen seitlich angeströmt und bei grossen Schiebewinkeln von $30^{\circ}$ bis $60^{\circ}$ treten grosse Querkräfte in seitlicher Richtung auf, die scharfe Wendemanöver ermöglichen, ohne dass das Flugzeug eine Rollbewegung ausführen muss.

Die Abmessungen der Zusatzflächen sind dem Flugzeugtyp anzupassen und können 10 bis 60% der Tragflügelfläche des Flugzeuges betragen. Dadurch wird erreicht, dass die Querkräfte auch bei hohen Geschwindigkeiten nicht grösser werden als sie von Piloten ausgehalten werden können (ca. 6g). Ausserdem haben die Querkräfte je nach Schiebewinkeln eine grosse Komponente in entgegengesetzter Richtung wie die Flugzeugsgeschwindigkeit. Auf den Piloten wirkt diese Kraft seitlich, so wie etwa auf einen Autorennfahrer die Zentrifugalkraft in engen Kurven, mit Lastvielfachen von zwei bis drei g. Da diese Kräfte hier nur innerhalb einer kurzen Zeitspanne wirken, können diese von einem gut ausgebildeten Piloten ohne weiteres ausgehalten werden. Durch das seitliche Ausweichmanöver mit einem sehr grossen Schiebewinkel ergibt sich eine starke Verzögerung der Geschwindigkeit des Flugzeuges infolge eines erhöhten Luftwiderstandes. Beispielsweise kann ein von hinten kommendes Flugzeug, das diese Supermanövrierbarkeit nicht aufweist, nicht so rasch bremsen und wird das Flugzeug überholen, wodurch das erfindungsgemässe Flugzeug von hinten in eine günstige Schussposition gelangen kann.

Das erfindungsgemässe Flugzeug ist auch bestens geeignet, um in Erdkämpfe einzugreifen oder Bodenziele zu bekämpfen, weil es in einer horizontalen Ebene, d.h. parallel zur Erdoberfläche manövrieren kann, ohne dass der Pilot eine Rollbewegung bei Richtungsänderungen einleiten muss. Dadurch behält der Pilot auch jederzeit eine gute Rundumsicht, weil nicht ein Teil der Sicht durch die Rollwinkellage der üblichen Flugzeuge verdeckt wird. Dem Piloten steht es natürlich jederzeit frei, das Flugzeug in der üblichen Weise zu manövrieren. Von dieser Möglichkeit wird er auch Gebrauch machen, besonders wenn er bei niedrigen Fluggeschwindigkeiten den Anstellwinkelbereich bis zu Extremwerten von $30^{\circ}$ bis $60^{\circ}$ voll ausnützen kann, ohne die zulässige Beschleunigungsgrenze zu überschreiten.

Durch die Zusatzflächen ist es möglich geworden, das Flugzeug in einer horizontalen Ebene zu manövrieren, ohne dass es eine Rollbewegung ausführen muss. Ein normales Flugzeug ist ein Ebenflügler. Durch die Zusatzflächen ist es zu einem sogenannten Kreuzflügler geworden und der Pilot kann sein Flugzeug beispielsweise in einer horizontalen Lage halten und mit Seiten- und Höhenruder alleine alle Flugbewegungen ausführen. Das Einhalten der horizontalen Lage kann auch durch eine automatische Steuerung erfolgen.

Bei stark nach hinten gepfeilten Tragflächen wird sich die Seitenstabilität durch das Abklappen der Zusatzflächen erhöhen, weil diese Flächenteile bei der gepfeilten Tragfläche im wesentlichen hinter dem aerodynamischen Druckpunkt liegen. In diesem Falle können die Steuerkräfte des Seitenruders 10 durch ein in den Gasstrahl hineinragendes Strahlruder 11 (siehe Figur 10) verstärkt werden. Beim Herunterschwenken der Zusatzflächen wird eine Kupplung 12 betätigt, wodurch das Strahlruder aktiviert wird. Damit können dann beliebig grosse Schiebewinkel erzielt werden. Anstelle des Strahlruders kann auch eine schwenkbare Abgasdüse üblicher Form verwendet werden.

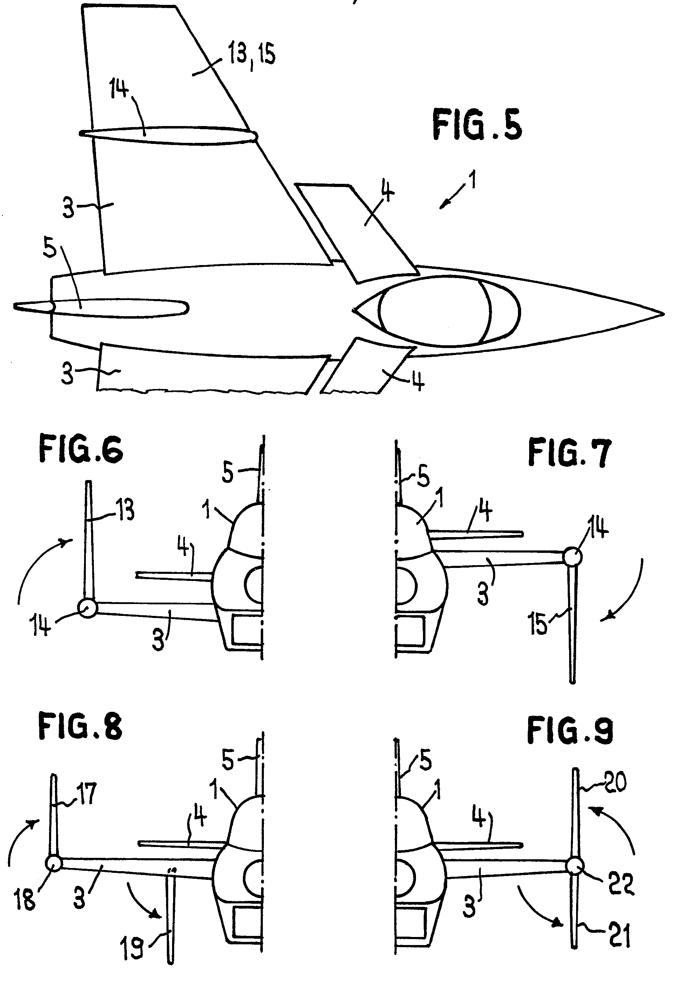

In den Figuren 5 bis 9 sind weitere Ausführungsbeispiele und -varianten von Zusatzflächen angegeben. Dabei wird das äussere Ende 13 oder 15 der Tragfläche um eine Achse 14 entweder nach oben oder nach unten abgeklappt. Die Tragflächenspannweite wird dadurch verringert und der sogenannte induzierte Widerstand erhöht, was auf das Luftmanöver auch einen positiven Einfluss haben kann. Bei einer nach hinten gepfeilten Tragfläche wird durch das Abklappen der Flügelenden die Seitenstabilität erhöht. Dies ist selbstverständlich auch der Fall bei den Ausführrungsvarianten gemäss Figuren 8 und 9, wobei beispielsweise ein Flügelende 17 um Achse 18 hochgeschwenkt und eine Zusatzfläche 19 hinuntergeklappt ist, während in

Figur 9 ein Tragflügelende 20 nach oben und eine Zusatzfläche 21 nach unten geklappt ist, wobei diese beiden Flächen um eine gemeinsame Achse 22 schwenkbar sind.

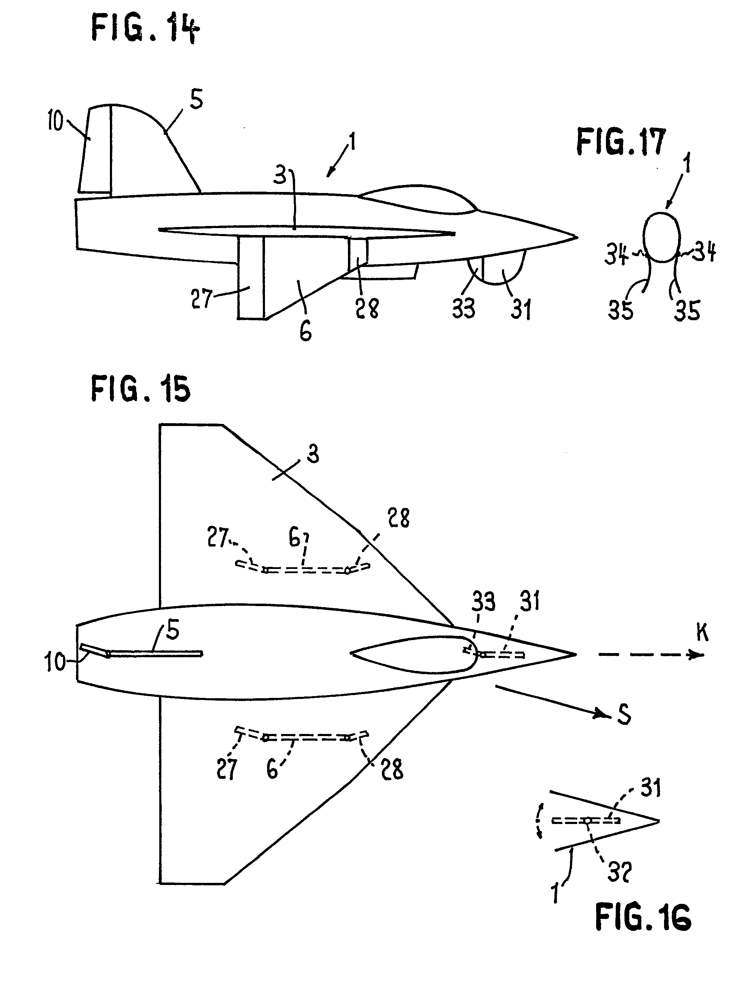

Die Manövrierbarkeit des Flugzeuges kann gemäss dem Ausführungsbeispiel nach den Figuren 14 bis 16 dadurch erhöht werden, dass die schwenkbaren Flächenteile 6 oder 7 entweder ganz um eine Mittelachse oder Teilflächen 27 und 28 davon um je eine Achse 29, 30 drehbar sind, wobei die Achsen senkrecht auf die Tragflügelflächen angeordnet sind. In der Regel genügt eine Schwenkbarkeit in beiden Richtungen um etwa $15^{\circ}$. Die Flächenteile 19 und 21 gemäss den Figuren 8 und 9 können auch derart ausgebildet sein.

Während beim Herabklappen der Tragflügelenden einerseits die Seitenstabilität erhöht wird, vermindert sich andererseits die Stabilität um die Querachse, d.h. die Längsstabilität. Durch eine geeignete Wahl der Flügelpfeilung und der Grösse und Lage der Zusatzflächen kann es erreicht werden, dass die Längsstabilität nahezu aufgehoben wird. Dies ist von Vorteil hinsichtlich der leichten und extremen Manövrierbarkeit um die Querachse bis zu extrem hohen Anstellwinkeln von $30^{\circ}$ bis $60^{\circ}$.

Bei erhöhter Seitenstabilität ist es zweckmässig, das Seitenleitwerk entsprechend zu verkleinern. In Figur 11 ist eine Anordnung dargestellt, um das Seitenleitwerk 26 zu verkleinern, d.h. um einen geeigneten Scharnierpunkt 23 nach unten in die Rumpfverkleidung hineinzuschwenken. Die Mechanik ist ähnlich derjenigen, die beim Verschwenken von ganzen Tragwerkshälften verwendet werden. Beim Herunterschwenken des Seitenleitwerks gelangt das nach unten verlängerte Steuerruder 24 in den Gasaustrittsstrahl des Triebwerkes und erfüllt dann die Aufgabe einer Schwenkdüse.

Die Verkleinerung oder Aufhebung der Seitenstabilität kann auch dadurch erreicht werden, dass eine vorne im Rumpf angeordnete Zusazfläche 31 herausgefahren oder -geschoben wird. Diese Fläche 31 kann entweder um eine vertikale Achse 32 in der Mitte geschwenkt werden (Fig. 16) oder wie die Seitenleitwerke Ruderklappen 33 aufweisen (Fig. 15).

Bei einer Ausführungsvariante können zwei Zusatzflächen 35, die im normalen Flug am Rumpf angeschmiegt sind, um die Achsen 34 heruntergeklappt werden, wobei diese Flächen oder Teilflächen davon auch um eine vertikale Achse schwenkbar sein können.

Das vordere Seitenleitwerk kann gegensinnig zu dem hinteren Seitenleitwerk 5 geschwenkt werden. In diesem Falle wird ein Kurvenflug eingeleitet. Man kann aber auch die beiden Seitenleitwerke gleichsinnig schwenken. Dann entsteht vorne und hinten eine gleich gerichtetet Seitenkraft und das Flugzeug führt eine Schiebebewegung, Pfeil Richtung S aus. Diese Schiebebewegung kann noch erhöht werden, wenn man die Zusatzflächen ausfährt und diese in derselben Richtung schwenkt oder mit Nasenklappen oder eventuell auch mit Hinterklappen versieht und diese Klappen gleichsinnig wirkend schwenkt. Die Schiebebewegung erlaubt es, mit den starren Bordkanonen ein Ziel, Schussrichtung gestrichelter Pfeil K, zu bekämpfen, ohne mit dem Ziel auf Kollisionskurs zu sein.

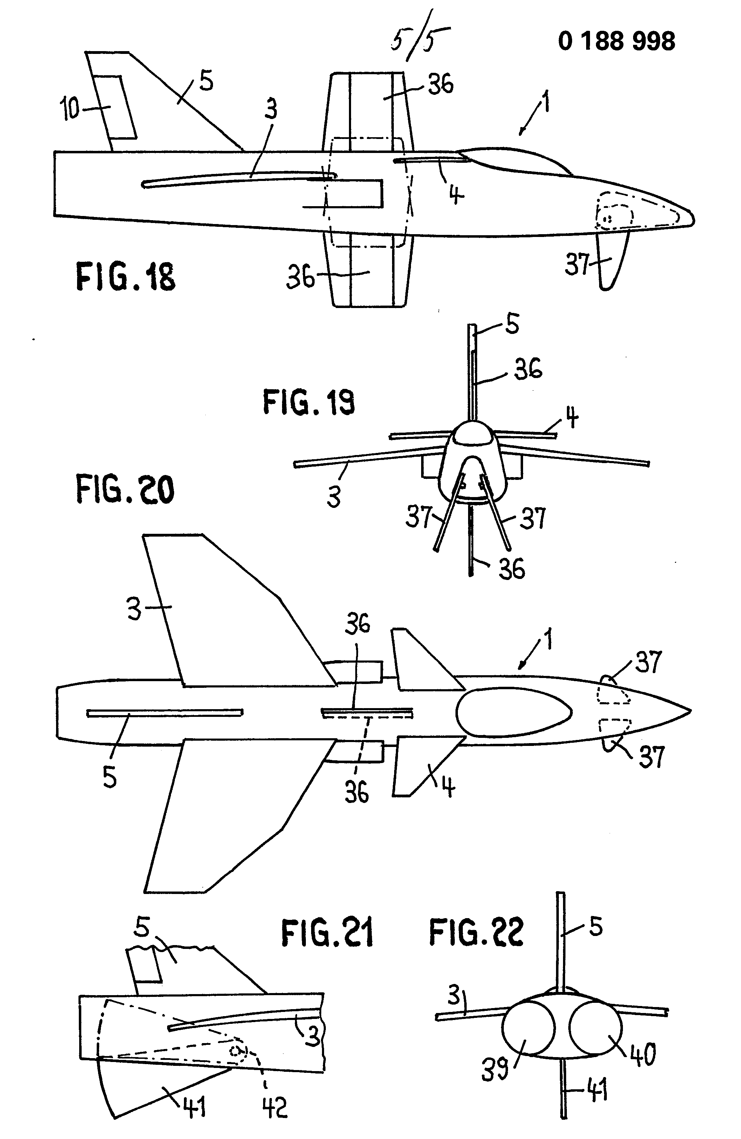

In den Figuren 18 - 20 ist ein weiteres Ausführungsbeispiel dargestellt, worin Zusatzflächen 36 nach oben und nach unten aus dem Rumpf herausfahrbar angeordnet sind. Bei diesem Flugzeugtyp sind hinter der Pilotenkanzel die Treibstoffbehälter angebracht und es ist möglich, diese Zusatzflächen 36 im Normalflug dazwischen anzuordnen und sie beim Gebrauch nach oben und unten herauszuschieben. Diese Zusatzflächen 36 können, wie bei den vorausgehenden Beispielen gemäss den Figuren 14 - 17, entweder ganz um eine vertikale Achse geschwenkt werden oder mit um vertikale Achsen schwenkbaren Teilflächen versehen werden. Die einer Ausführungsvariante zu Fig. 16 können die vorderen Zusatzflächen 37 um eine quer verlaufende horizontale Achse 38 nach unten geschwenkt werden, wobei auch sie sich beim Normalflug an den Rumpf anschmiegen oder im Bug verschwinden. Auch diese Zusatzflächen oder Teilflächen davon können zusätzlich um vertikale Achsen geschwenkt werden.

Bei Flugzeugen mit zwei Triebwerken 39 und 40, s. Fig. 21 und 22, kann eine Zusatzfläche 41 zwischen den beiden Triebwerken um eine Achse 42 herabgeschwenkt werden, wobei auch diese Zusatzfläche oder Teile davon um eine vertikale Achse schwenkbar sein kann.

In den gezeichneten Ausführungsbeispielen befindet sich die Lufteintrittsöffnung 2 für die Triebwerke unter dem Rumpf. Bei hohen Anstellwinkeln ist eine gute Zuströmung der Luft zum Triebwerk gewährleistet. Bei grossen Schiebewinkeln dagegen kann die Luftströmung abreissen. Es ist daher zweckmässig, den Düseneinlauf um einen etwa dem Schiebewinkel $\alpha$ entsprechenden Betrag zu verschwenken, damit eine gute Luftzuführung gewährleistet ist. In Figur 13 ist, schematisch, eine solche in der Ebene der Tragflügel schwenkbare Lufteintrittsöffnung 25 dargestellt. Dabei ist es selbstverständlich, dass dies auch bei seitlich angeordneten Lufteintrittsöffnungen gilt.

Wie aus obigen Ausführungen hervorgeht, ist die Erfindung, d.h. das Anbringen von Zusatzflächen nicht an die gezeichneten Ausführungsbeispiele gebunden. So können diese Zusatzflächen auch bei Flugzeugen angebracht werden, dessen Tragflächen anstatt nach hinten nach vorne gepfeilt sind oder bei solchen Flugzeugen, die kein Entenleitwerk aufweisen, sondern ein hinten angeordnetes Höhenleitwerk. Selbstverständlich können Zusatzflächen auch an Flugzeugen angebracht werden, die mehrere Triebwerke aufweisen. Es ist auch möglich, sowohl die Achsen der Zusatzflächen und -Enden nicht ganz parallel zur Rumpfmittelachse anzubringen als auch die Zusatzflächen und -Enden nicht ganz senkrecht zu den Tragflächen auszuschwenken.

Ausserdem ist es möglich, die Zusatzflächenteile am oder im Rumpf anzubringen, wobei diese Teile zweckmässigerweise nicht unterhalb des Schwerpunktes angebracht werden sollten. Durch die Zusatzklappen und/oder die herausgebrachten Seitenleitwerksflächen wird die Manövrierbarkeit stark verbessert.

Patentansprüche

1. Supermanövrierbares Flugzeug, dadurch gekennzeichnet, dass es Flächenteile (6, 7; 13, 15, 17, 20; 19, 21, 35, 37, 41) aufweist, die um Achsen (8, 9; 14, 16, 18, 22, 34, 38), die etwa in Richtung der Rumpflängsmittelachse (RM) angeordnet sind, schwenkbar und etwa senkrecht zur Ebene der Tragflügelflächen (3) bringbar oder herausfahrbar (31, 36) sind.

2. Flugzeug nach Anspruch 1, dadurch gekennzeichnet, dass die Fläche der schwenkbaren Flächenteile 10-60 % der Fläche der Tragflügel beträgt.

3. Flugzeug nach Anspruch 1 oder 2, dadurch gekennzeichnet, dass solche Flächenteile (6, 7; 13, 15, 17, 20; 19, 21) an den Tragflügeln (3) angeordnet sind.

4. Flugzeug nach einem der Ansprüche 1 bis 3, dadurch gekennzeichnet, dass solche Flächenteile (31, 35, 36, 37, 41) am oder im Rumpf angeordnet und schwenkbar oder herausfahrbar angebracht sind.

5. Flugzeug nach einem der Ansprüche 1 bis 4, dadurch gekennzeichnet, dass sich solche Flächenteile (6, 7; 19; 21; 35, 37) im Normalflug an die Tragflügelflächen oder am Rumpf anschmiegen.

6. Flugzeug nach einem der Ansprüche 1 bis 5, dadurch gekennzeichnet, dass solche Flächenteile (6, 7; 19, 21; 31, 35, 36, 37, 41) oder Teilflächen davon (27, 28; 33) um eine im herausgebrachten Zustand etwa senkrecht zur Tragflügelebene verlaufenden Achse (29, 30; 32) schwenkbar sind.

7. Flugzeug nach einem der Ansprüche 1 bis 6, dadurch gekennzeichnet, dass solche herausfahrbaren oder schwenkbaren Flächenteile (31, 35, 37) am Bug angebracht sind.

8.    Flugzeug nach einem der Ansprüche 1 bis 7, dadurch gekennzeichnet, dass etwa in seiner Mitte solche Flächenteile (36) im Rumpf angeordnet und/oder nach oben und unten herausfahrbar sind.

9.    Flugzeug nach einem der Ansprüche 1 bis 8 mit zwei Triebwerken, dadurch gekennzeichnet, dass ein solches Flächenteil (41) am Heck angeordnet und um eine quer zur Längsachse verlaufenden Achse (42) herunterschwenkbar ist, wobei sich dieses Flächenteil zwischen den beiden Triebwerken (39, 40) befindet.

10.    Flugzeug nach einem der Ansprüche 1 bis 3, dadurch gekennzeichnet, dass solche Flächenteile (13, 15, 17, 20) an den Tragflügelenden angebracht sind und um Achsen (14, 16, 18, 22) nach oben oder unten schwenkbar sind.

11.    Flugzeug nach einem der Ansprüche 1 bis 10, dadurch gekennzeichnet, dass es sowohl Flächenteile (19, 21), die sich im Normalflug an die Tragflügelfläche anschmiegen als auch Flächenteile (17, 20), die am Tragflügelende angeordnet sind, aufweist.

12.    Flugzeug nach einem der Ansprüche 1 bis 11, dadurch gekennzeichnet, dass das Seitenruder (10) des Seitenleitwerks (5) des Flugzeugs (1) ein in den Gasstrahl des Triebwerks hineinragendes Strahlruder (11) aufweist, dass über eine Kupplung (12) mit dem Seitenruder verbunden ist.

13.    Flugzeug nach einem der Ansprüche 1 bis 11, dadurch gekennzeichnet, dass das Seitenleitwerk (26) des Flugzeugs (1) um eine Achse (23) schwenkbar und das Seitenruder (24) des Seitenleitwerks in den Gasstrahl des Triebwerks bringbar ist.

14. Flugzeug nach einem der Ansprüche 1 bis 13, dadurch gekennzeichnet, dass die Eintrittsöffnung (25) des Strahltriebwerks schwenkbar ist.

15. Flugzeug nach einem der Ansprüche 1 bis 14, dadurch gekennzeichnet, dass die Tragflügel nach hinten gepfeilt sind.

16. Flugzeug nach einem der Ansprüche 1 bis 14, dadurch gekennzeichnet, dass die Tragflügel nach vorne gepfeilt sind.

17. Flugzeug nach einem der Ansprüche 1 bis 15, dadurch gekennzeichnet, dass es ein Entenleitwerk aufweist.

0 188 998

FIG.1

FIG.2

FIG.3

FIG.4

RM

**FIG.5**

13,15

14

3

5

1

4

3

4

**FIG.6**

13

14

5

1

4

3

**FIG.7**

5

1

4

14

3

15

**FIG.8**

17

5

1

4

18

3

19

**FIG.9**

5

1

4

20

3

22

21

15/5

**FIG.10**

3

6,7

**FIG.11**

10

5

1

12

11

7

3

6

**FIG.12**

26

23

1

24

14

3

15

**FIG.13**

3  4

1

25

2

3  4

α

**FIG. 14**

**FIG. 17**

**FIG. 15**

**FIG. 16**

**FIG.18**

**FIG.19**

**FIG.20**

**FIG.21**

**FIG.22**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 531 478 (WÜRTH) <br> * Insgesamt * | 1,3,5 | B 64 C 5/08 |
| X | GB-A-1 075 403 (BRITISH AIRCRAFT) <br> * Seite 1, Zeilen 53-81 * | 1,10 | |
| X | US-A-2 999 657 (CLARK) <br> * Spalte 5, Zeilen 33-52 * | 4,5,9 | |
| X | US-A-3 442 472 (KALINA) <br> * Insgesamt * | 4,5,8 | |
| X | FR-A-1 083 557 (SOCIETE FRANCAISE D'ETUDES ET DE CONSTRUCTION DE MATERIELS AERONAUTIQUES SPECIAUX) <br> * Seite 4, linke Spalte, Zeilen 27-36 * | 7,15, 17 | |
| X | US-A-4 012 013 (BALL) <br> * Zusammenfassung * | 14 | RECHERCHIERTE SACHGEBIETE (Int. Cl.4) <br><br> B 64 C <br> B 64 D |
| X | FR-A-1 319 416 (O.N.E.R.A.) <br> * Insgesamt * | 5,9 | |
| X | CH-A- 220 097 (HAUSHEER) <br> * Seite 1, Zeilen 24-32 * | 1,5 | |

--- -/-

Der vorliegende Recherchenbericht wurde für alle Patentansprüche erstellt.

| Recherchenort <br> DEN HAAG | Abschlußdatum der Recherche <br> 04-03-1986 | Prüfer <br> HAUGLUSTAINE H.P.M. |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | US-A-2 562 905 (GADEBERG) <br> * Spalte 3, Zeilen 41-51 * <br><br> --- | 1,3,4 | |
| A | GB-A-2 010 195 (MESSERSCHMITT) <br> * Zusammenfassung * <br><br> --- | 1 | |
| A | US-A-4 236 684 (BERRIER) <br> * Zusammenfassung * <br><br> ----- | 12 | |
| | | | **RECHERCHIERTE SACHGEBIETE (Int. Cl.4)** |

Der vorliegende Recherchenbericht wurde für alle Patentansprüche erstellt.

| Recherchenort <br> DEN HAAG | Abschlußdatum der Recherche <br> 04-03-1986 | Prüfer <br> HAUGLUSTAINE H.P.M. |
|---|---|---|